# EUROPÄISCHE PATENTSCHRIFT

(11) **EP 3 427 111 B1**
(45) Veröffentlichungstag und Bekanntmachung des Hinweises auf die Patenterteilung: **11.05.2022**
(21) Anmeldenummer: 17709635.1
(22) Anmeldetag: 06.03.2017
(51) Int. Cl.: G05B 19/406

(54) **VERFAHREN ZUM BETREIBEN EINER DURCHLAUFMASCHINE SOWIE DURCHLAUFMASCHINE**
METHOD FOR OPERATING A PASS-THROUGH MACHINE, AND PASS-THROUGH MACHINE
PROCÉDÉ DE FONCTIONNEMENT D'UNE MACHINE DE CHAÎNE DE PRODUCTION AINSI QUE MACHINE DE CHAÎNE DE PRODUCTION

(30) Priorität: 07.03.2016 DE 102016203674
(43) Veröffentlichungstag der Anmeldung: 16.01.2019
(73) Patentinhaber: HOMAG GmbH, 72296 Schopfloch (DE)
(72) Erfinder: FRIEBOLIN, Manuel, 75365 Calw-Sth. (DE); GRAF, Joachim, 72189 Vöhringen (DE)
(74) Vertreter: Hoffmann Eitle
(86) Internationale Anmeldenummer: PCT/EP2017/055166
(87) Internationale Veröffentlichungsnummer: WO 2017/153323

(56) Entgegenhaltungen:
- DE-A1- 10 047 385
- DE-A1-102013 204 409
- DE-A1-102014 204 695

## Beschreibung

### Technisches Gebiet

Die vorliegende Erfindung betrifft ein Verfahren zum Betreiben einer Durchlaufmaschine, insbesondere einer für den Einsatz im Bereich der Möbel- und Bauelementeindustrie vorgesehenen Durchlaufmaschine, sowie eine Durchlaufmaschine.

### Stand der Technik

Als Stand der Technik ist z.B. die DE 10 2010 017 857 A1 bekannt, in der eine 3D-Sicherheitsvorrichtung und ein Verfahren zur Absicherung und Bedienung mindestens einer Maschine beschrieben wird. Die Vorrichtung weist einen 3D-Sensor zur Erfassung dreidimensionaler Bilddaten eines Arbeitsplatzes auf, in dem ein Bediener eine Maschine bedient. Die beschriebene Vorrichtung stellt eine Maschine bereit, die die Zusammenarbeit zwischen Mensch und Maschine an einem kooperativen Arbeitsplatz bei voller Absicherung gegenüber Unfallgefahren verbessert.

Ferner finden in jüngster Zeit neuartige Systeme zur Visualisierung von zwei- oder dreidimensionalen Bilddaten wie Laseranzeigeeinrichtungen, Beamer, Datenbrillen oder HMDs (Head Mounted Displays) in der industriellen Fertigung Einzug, welche neue Möglichkeiten der Informationsübermittlung bieten.

Als weiterer Stand der Technik ist die DE 10 2014 204 695 A1 zu nennen, welche ein Verfahren zum Betreiben einer Plattenbearbeitungsanlage, anhand der aus einem Ausgangswerkstück mittels einer Bearbeitungseinrichtung ein bearbeitetes Werkstück hergestellt wird, beschreibt, bei dem mittels einer Bilderfassungseinrichtung mindestens ein Teilbereich der Plattenbearbeitungsanlage beobachtet wird. Es wird vorgeschlagen, dass der Betrieb der Plattenbearbeitungsanlage von mindestens einer von der Bilderfassungseinrichtung erfassten und mit dem Ausgangswerkstück und/oder dem bearbeiteten Werkstück zusammenhängenden Größe abhängt. Die DE 10 2014 204 695

A1 beschreibt ferner, dass die Bilderfassungseinrichtung mittels Kameras die Werkstückgeometrie erkennt und den entsprechenden Schnittplan für dieses Werkstück einlegt.

Des Weiteren beschreibt die DE 10 2013 204 409 A1 eine Plattenbearbeitungsanlage umfassend: eine Bearbeitungseinrichtung zum Bearbeiten von plattenförmigen Werkstücken mindestens einen im Materialfluss nach der Bearbeitungseinrichtung angeordneten Abstapelplatz zum Abstapeln bearbeiteter Werkstücke, eine Steuereinrichtung und eine von der Steuereinrichtung angesteuerte Ausgabeeinrichtung, welche Informationen zur Bedienung der Plattenaufteilanlage ausgibt. Es wird unter anderem vorgeschlagen, dass die Steuereinrichtung mindestens einen ein bearbeitetes Werkstück charakterisierenden Parameter ermittelt und abhängig von dem ermittelten Parameter sowie abhängig von mindestens einem vorgebbaren Optimierungsparameter eine Soll-Position und Soll-Ausrichtung für das bearbeitete Werkstück auf dem Abstapelplatz ermittelt, und dass die Steuereinrichtung die Ausgabeeinrichtung so ansteuert, dass diese die ermittelte Soll-Position und Soll-Ausrichtung ausgibt und dieses Ausgeben zeitlich angepasst an den Betrieb der Plattenbearbeitungsanlage erfolgt.

### Gegenstand der Erfindung

Eine Aufgabe der vorliegenden Erfindung ist es, die Handhabungstätigkeit eines Bedieners an einer Durchlaufmaschine zu erleichtern und gleichzeitig die Prozesssicherheit zu erhöhen.

Diese Aufgabe wird durch ein Verfahren gemäß Anspruch 1 sowie eine Durchlaufmaschine gemäß Anspruch 12 gelöst.

Einer der Kerngedanken der vorliegenden Erfindung ist es, ein Verfahren zum Betreiben einer Durchlaufmaschine bereitzustellen, bei dem anhand einer Werkstückerfassungseinrichtung ein Werkstück erfasst und/oder identifiziert wird, und basierend auf den ermittelten Informationen der Werkstückerfassungseinrichtung eine Handhabungsinformation mittels einer Informationseinrichtung an einen Bediener der Durchlaufmaschine ausgegeben wird, bereitzustellen.

Mittels des vorgeschlagenen Verfahrens können dem Bediener der Durchlaufmaschine während der Bedienung der Durchlaufmaschine aktuelle Handhabungsinformationen angezeigt werden. So ist es zum Beispiel möglich, dem Bediener fehlerhafte Werkstücke und/oder Handhabungsfehler umgehend anzuzeigen, was die Handhabung der Durchlaufmaschine erleichtert sowie zur Reduzierung der Ausschussquote von Fehlteilen positiv beiträgt.

Gemäß einer bevorzugten Ausführungsform der vorliegenden Erfindung dient das Verfahren zum Betreiben einer Durchlaufmaschine zur Kanten- bzw. Kanten und Formatbearbeitung von Werkstücken, die bevorzugt aus Holz, Holzwerkstoffen, Kunststoffen oder dergleichen bestehen. Das Verfahren umfasst die folgenden Schritte: Durchführen einer Erfassung und/oder einer Identifizierung eines Werkstücks in einem Überwachungsbereich der Durchlaufmaschine, Durchführen einer Ausgabe einer Handhabungsinformation mittels einer Informationseinrichtung an einen Bediener auf Grundlage der mittels der Werkstückerfassungseinrichtung ermittelten Informationen, bevorzugt Durchführen einer Handhabung durch einen Bediener gemäß der ausgegebenen Handhabungsinformation und nachfolgendes Zuführen des gehandhabten Werkstücks zu einer Bearbeitungseinrichtung der Durchlaufmaschine.

Auf diese Weise wird ein Verfahren bereitgestellt, mit dem eine Erfassung und/oder Identifizierung eines Werkstücks in einem definierten Überwachungsbereich der Durchlaufmaschine durchgeführt werden kann, und basierend auf den ermittelten werkstückspezifischen Informationen eine Handhabungsinformation an einen Bediener der Durchlaufmaschine ausgegeben werden kann.

So kann beispielsweise von der Werkstückerfassungseinrichtung erfasst werden, ob das erfasste Werkstück einem Soll-Werkstück entspricht, also ob z.B. die mittels der Werkstückerfassungseinrichtung erfasste Werkstücknummer mit einer Werkstücknummer in einem Bearbeitungsplan übereinstimmt, und bestätigen, dass das erfasste Werkstück tatsächlich der nächsten Bearbeitungseinrichtung der Durchlaufmaschine zugeführt werden soll. Falls das erfasste Werkstück dem Soll-Werkstück entspricht, kann dem Bediener anhand der Informationseinrichtung eine positive Bestätigung angezeigt werden.

Erfindungsgemäß wurde das durch die Werkstückerfassungseinrichtung zu erfassende Werkstück, welches im Überwachungsbereich vorliegt, bereits durch eine Bearbeitungseinrichtung der Durchlaufmaschine manipuliert. Nachdem ein Werkstück von einer Bearbeitungseinrichtung der Durchlaufmaschine manipuliert wurde, und bevor dieses Werkstück von einer weiteren oder dergleichen Bearbeitungseinrichtung erneut manipuliert wird, wird dieses von der Werkstückerfassungseinrichtung erfasst und/oder identifiziert.

Insbesondere erfolgt die Erfassung und/oder Identifizierung des Werkstücks an einer Stelle der Durchlaufmaschine, an welcher das Werkstück in einem nächsten Schritt von dem Bediener gehandhabt bzw. manipuliert werden soll.

So kann in diesem Fall die Werkstückerfassungseinrichtung erfassen, dass bei dem erfassten Werkstück ein Mangel vorhanden ist, und entsprechend kann dem Bediener anhand der Informationseinrichtung angezeigt werden, wie er mit dem mangelhaften Werkstück verfahren muss, z.B. dieses einer Nachbearbeitung unterziehen muss, bevor es wieder dem weiteren Bearbeitungsablauf zugeführt werden kann.

Gemäß der vorliegenden Erfindung ist der Überwachungsbereich auf einen Bereich einer Rücktransporteinrichtung, mit der die Werkstücke nach erfolgter Manipulation bzw. Bearbeitung mittels einer vorgelagerten Bearbeitungseinrichtung zum Bediener transportiert werden, beschränkt.

Hierbei kann die Werkstückerfassungseinrichtung die Werkstücke während des Transports auf der Rücktransporteinrichtung erfassen und/oder identifizieren und/oder kann die Werkstücke im Stillstand, wenn sie in einem Zwischenspeicher der Rücktransporteinrichtung zwischengespeichert werden erfassen und/oder identifizieren. Der Überwachungsbereich kann wie später noch im Detail ausgeführt, nicht nur die Rücktransporteinrichtung umfassen, sondern kann grundsätzlich alle Bereiche der Durchlaufmaschine umfassen, wie z.B. Ablagebereiche, Abstapelplätze, Auslaufbereiche, Bearbeitungsbereiche, jegliche Art an Förderbereichen und dergleichen.

Bevorzugt gibt die Informationseinrichtung die Handhabungsinformationen an den Bediener visuell aus. Dies kann z.B. anhand mindestens eines Bildschirms und/oder mindestens einer Laseranzeigeeinrichtung und/oder mindestens eines Beamers bzw. Projektors erfolgen. Hierbei bieten die letzteren drei insbesondere den Vorteil, dass die Handhabungsinformation direkt auf eine Stelle innerhalb der Durchlaufmaschine projiziert werden kann, und somit dem Bediener direkt vor Ort angezeigt werden kann, was die Wahrscheinlichkeit, dass der Bediener die Handhabungsinformation übersieht, reduziert. Diesbezüglich ist es auch möglich, Datenbrillen oder HMDs (Head Mounted Displays) zu nutzen. Des Weiteren besteht die Möglichkeit, die Handhabungsinformation akustisch und/oder haptisch auszugeben.

Ferner können die Handhabungsinformationen direkt auf das Werkstück projiziert werden oder in einem Ablagebereich der Durchlaufmaschine visuell angezeigt werden. So besteht z.B. die Möglichkeit, den Ablagebereich als Display auszuführen, und anhand des Displays die jeweiligen Handhabungsinformationen anzuzeigen.

Bevorzugt ist es möglich die Handhabungsinformation in Form einer Darstellung der Außenkontur des jeweiligen Werkstücks, d.h. der Außenkontur des Soll-Werkstücks, in dem Ablagebereich der Durchlaufmaschine, anzuzeigen. Hierbei ist es auch denkbar, die korrekte Ablageposition des Werkstücks innerhalb des Ablagebereichs zu visualisieren. Hierbei kann auch die korrekte Orientierung des Werkstücks angezeigt werden. Was wiederum zu einer Reduzierung von Handhabungsfehlern beiträgt.

In einer bevorzugten Ausführungsform wird nach erfolgter Ablage des durch den Bediener gehandhabten Werkstücks, in dem Ablagebereich, anhand einer Prüfeinrichtung eine Überprüfung der durchgeführten Handhabung vorgenommen. Hierbei kann insbesondere die Position und Orientierung des abgelegten Werkstücks geprüft werden. Ferner ist es möglich zu prüfen, ob das Werkstück während der erfolgten Handhabung seitens des Bedienerst beschädigt wurde.

Erkennt die Prüfeinrichtung, dass die durchgeführte Handhabung seitens des Bedieners der mittels der Informationseinrichtung angezeigten Handhabungsinformation entspricht, gibt die Prüfeinrichtung das gehandhabte Werkstück für einen nachfolgenden Bearbeitungsschritt frei. Entsprechend kann z.B. das gehandhabte Werkstück beispielsweise mittels einer Fördereinrichtung einer weiteren Bearbeitungseinrichtung zugeführt werden.

Bei der Überprüfung kann insbesondere die Position und/oder die Orientierung des Werkstücks im Ablagebereich geprüft werden, wodurch eine falsch orientierte Ablage des Werkstücks erkannt und eine Fehlbearbeitung des Werkstücks in einer nachfolgenden Bearbeitungseinrichtung vermieden werden kann. Anhand der Prüfeinrichtung kann auch geprüft werden, ob seitens des Bedieners das richtige Werkstück eingelegt wurde.

Bevorzugt kann das Werkstück von der Werkstückerfassungseinrichtung mittels eines Identifikationssystems oder mittels Auslesen einer Codierung erfasst werden.

Anhand der Werkstückerfassungseinrichtung ist es möglich, mindestens eine der nachfolgenden Informationen des Werkstücks zu erfassen: eine Abmessung, Orientierung, Lage im Raum, Position, Masse, Vorhandensein sowie Lage und/oder Ausrichtung eines Etiketts, einer Markierung, eines Barcodes, eines Beschlags, einer Nut und/oder eines Bohrbilds am Werkstück. Ferner können die Oberflächenbeschaffenheit und/oder die Art der Veredelung des Werkstücks erfasst werden. Anhand der beschriebenen Eigenschaften des Werkstücks ist es bevorzugt möglich, das erfasste Werkstück exakt zu identifizieren.

So kann bevorzugt anhand von erfassten Abmessungen des Werkstücks, bzw. der erfassten Abmessungen und/oder Form des Werkstücks, und/oder einer am Werkstück angebrachten Codierung eine Identifikation des Werkstücks erfolgen.

Was die Codierung angeht, so kann diese in Form eines Barcodes, eine QR-Codes oder einer RFID-Chips erfolgen. Dies ist insbesondere vorteilhaft, wenn die Erfassung und/oder Identifizierung des Werkstücks in einer Umgebung erfolgt, in der eine visuelle Erfassung mittels z.B. der Außenkontur nicht möglich oder nicht stabil realisierbar ist.

Die Prüfeinrichtung führt die Überprüfung der seitens des Bedieners durchgeführten Handhabung auf Korrektheit anhand einer Bildverarbeitungseinrichtung durch.

Grundsätzlich können das Identifikationssystem der Werkstückerfassungseinrichtung sowie die Prüfeinrichtung der vorliegenden Erfindung in Form einer Bilderverarbeitungseinrichtung ausgebildet sein. Wobei unter der Bildverarbeitungseinrichtung sowohl eine Einrichtung verstanden werden kann, die nur die reine Erfassungsfunktion aufweist (beispielsweise ein CCD-Sensor), als auch eine Kombination von Komponenten verstanden werden, die sowohl die reine Bilderfassung bewerkstelligen als auch die erfassten Signale bzw. Bilder verarbeiten (also eine Bilderfassungs- und verarbeitungseinrichtung), beispielsweise eine Kamera mit integrierter Verarbeitungs- und/oder Auswerteeinrichtung oder eine Kombination aus einer Kamera und einer an diese angeschlossenen Verarbeitungs- und/oder Auswerteeinrichtung, beispielsweise in Form einer Software einer Steuer- und Regeleinrichtung.

Ferner können die Bilderfassungseinrichtungen der Werkstückerfassungseinrichtung und/oder der Prüfeinrichtung anhand von z.B. mehreren Kameras realisiert sein, welche an verschiedenen Stellen der Durchlaufmaschine angeordnet sein können, um die Erfassungsgenauigkeit zu verbessern sowie den Erfassungsbereich bzw. den Überwachungsbereich zu vergrößern.

Ferner kann wenn mittels der Prüfeinrichtung ein Handhabungsfehler durch den Bediener erfasst wird, ein akustisches, ein haptisches und/oder ein visuelles Signal ausgegeben werden, wobei das ausgegebene Signal bevorzugt eine zusätzliche Korrekturinformation umfasst. Anhand welcher dem Bediener nach Erkennung eines Handhabungsfehlers oder einer Abweichung vom Sollzustand, eine Anweisung zur Korrektur des Mangels angezeigt wird. Hierbei kann zum Beispiel dem Bediener angezeigt werden, das Werkstück einer Nachbearbeitung zu unterziehen, das Werkstück lediglich in der korrekten Orientierung abzulegen oder das Werkstück als Fehlteil auszuschleusen.

Zur Reduzierung der benötigten Hardware und Anschaffungskosten kann das Erfassen und/oder Identifizieren des Werkstücks und die Überprüfung der durchgeführten Handhabung durch dieselbe Einrichtung vorgenommen werden. D.h., die Werkstückerfassungsvorrichtung und die Prüfeinrichtung können anhand einer Einrichtung realisiert werden, insbesondere in Bezug auf die Verarbeitungs- und/oder Auswerteeinrichtung.

Des Weiteren ist die vorliegende Erfindung auf eine Durchlaufmaschine gerichtet, insbesondere auf eine Durchlaufmaschine zur Kanten- bzw. Kanten- und Formatbearbeitung von Werkstücken. Hierzu weist die Durchlaufmaschine einen Überwachungsbereich, eine Werkstückerfassungseinrichtung, die dazu eingerichtet ist Werkstücke, die in dem Überwachungsbereich vorhanden sind, zu erfassen und/oder identifizieren, und eine Informationseinrichtung auf, die basierend auf Informationen, die mittels der Werkstückerfassungseinrichtung ermittelt werden, eine Handhabungsinformation ausgibt. Wobei die ermittelten Informationen und die ausgegebenen Handhabungsinformationen jeweils eine Einheit bilden, die zu einem spezifischen Werkstück gehört.

Ferner weist die Durchlaufmaschine eine Zuführeinrichtung zum Zuführen der Werkstücke zu einer Bearbeitungseinrichtung der Durchlaufmaschine auf.

Auf diese Weise kann eine Vorrichtung bereitgestellt werden, mit der Werkstücke, die anhand einer Zuführeinrichtung einer Bearbeitungseinrichtung der Durchlaufmaschine zugeführt werden sollen, und zuvor einer manuellen Handhabung durch einen Bediener unterzogen werden, erfasst und/oder identifiziert werden, wodurch sichergestellt werden kann, dass die korrekten Werkstücke in einer korrekten Abfolge der Bearbeitungsrichtung zugeführt werden.

Gemäß der vorliegenden Erfindung steht die Zuführeinrichtung mit einer Umlaufeinrichtung in Verbindung, die dazu eingerichtet ist, ein Werkstück von einem Auslauf der Durchlaufmaschine zur Zuführeinrichtung zu bewegen bzw. zu transportieren.

Ferner ist die Werkstückerfassungseinrichtung der Durchlaufmaschine in Form einer Bildverarbeitungseinrichtung oder einer Ausleseeinrichtung, die eine am Werkstück vorgesehene Codierung ausliest, ausgebildet.

Des Weiteren kann die Informationseinrichtung in Form mindestens eines Bildschirms und/oder mindestens einer Laseranzeigeeinrichtung und/oder mindestens eines Beamers bzw. Projektors ausgebildet sein. Hierbei kann anhand der letzteren drei Beispiele die Handhabungsinformation direkt auf eine Stelle innerhalb der Durchlaufmaschine projiziert werden, insbesondere direkt auf das betreffende Werkstück. Ferner kann die Informationseinrichtung in Form mindestens eines Lautsprechers bzw. eines Kopfhörers und/oder eines Tastgerätes wie z.B. eines Datenhandschuhs ausgebildet sein.

### Kurze Beschreibung der Zeichnungen

- Fig. 1: zeigt eine perspektivische Ansicht einer Ausführungsform einer Durchlaufmaschine gemäß der vorliegenden Erfindung.
- Fig. 2: zeigt zwei Beispiele einer möglichen Handhabungsinformation (HI), die direkt auf ein Werkstück projiziert ist.
- Fig. 3: zeigt eine perspektivische Ansicht einer Ausführungsform eines Auslaufs einer Durchlaufmaschine gemäß der vorliegenden Erfindung.
- Fig. 4: zeigt ein Ablaufdiagramm, welches die einzelnen Schritte einer Ausführungsform des Verfahrens zum Betreiben einer Durchlaufmaschine gemäß der vorliegenden Erfindung darstellt.

Detaillierte Beschreibung bevorzugter Ausführungsformen

Nachfolgend werden unter Bezugnahme auf die beigefügten Figuren bevorzugte Ausführungsformen der vorliegenden Erfindung beschrieben. Weitere in diesem Zusammenhang genannte Varianten und Modifikationen einzelner Merkmale können jeweils miteinander kombiniert werden, um neue Ausführungsformen auszubilden.

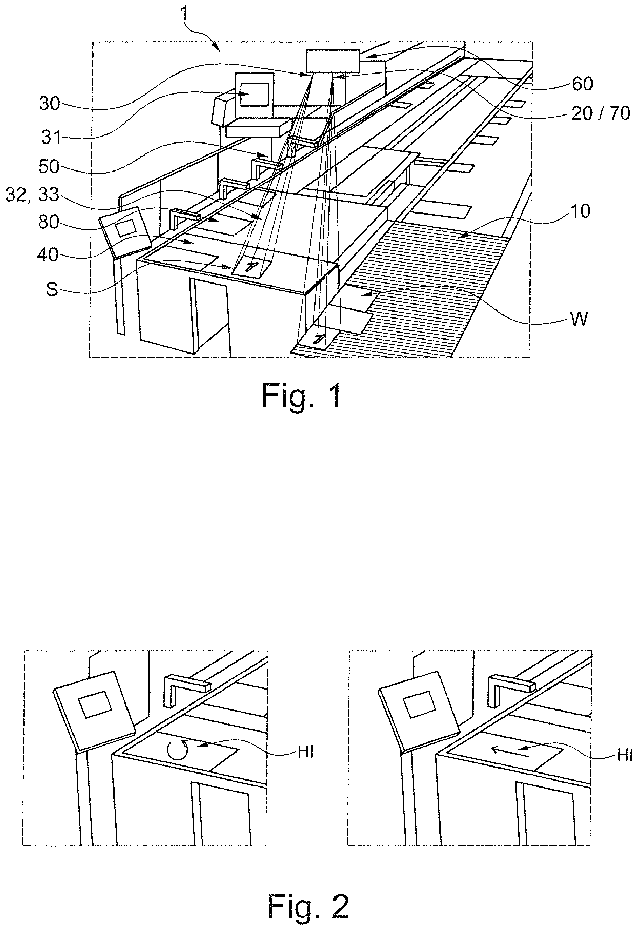

Fig. 1 zeigt eine perspektivische Ansicht einer Ausführungsform einer Durchlaufmaschine gemäß der vorliegenden Erfindung.

Wie der Fig. 1 entnommen werden kann, weist gemäß einer Ausführungsform der vorliegenden Erfindung die Durchlaufmaschine 1, einen Überwachungsbereich 10, eine Werkstückerfassungseinrichtung 20 und eine Informationseinrichtung 30 auf. Hierbei ist die Werkstückerfassungseinrichtung 20 oberhalb des Überwachungsbereichs 10 angeordnet, so dass ein in den Überwachungsbereich 10 zugeführtes Werkstück W erkannt werden kann. Wird ein zugeführtes Werkstück W durch die Werkstückerfassungseinrichtung 20 erkannt, welches optional bereits durch eine Bearbeitungsmaschine 50 der Durchlaufmaschine 1 bearbeitet wurde, erfolgt in einem nächsten Schritt eine Erfassung und/oder Identifizierung des Werkstücks W anhand der Werkstückerfassungseinrichtung 20. Hierzu ist die Werkstückerfassungseinrichtung 20 beispielhaft mit einer Kamera ausgestattet, die den Überwachungsbereich 10 überwacht. Es können jedoch auch mehrere Kameras eingesetzt werden, die insbesondere an unterschiedlichen Stellen in der Durchlaufmaschine installiert sein können, um das Werkstück W aus verschiedenen Winkeln zu erfassen. Auf diese Weise kann die Erfassungsgenauigkeit weiter gesteigert werden.

Hierbei wird unter Erfassen verstanden, dass z.B. eine Abmessung, Orientierung, Lage im Raum, Position, Masse, das Vorhandensein sowie die Lage und/oder die Orientierung eines Etiketts, einer Markierung, eines Barcodes, eines Beschlags, einer Nut und/oder eines Bohrbilds am Werkstück W erfasst wird bzw. werden. Unter Identifizierung ist hingegen zu verstehen, dass anhand bestimmter Merkmale, wie z.B. den Abmessungen eines Werkstücks oder einer angebrachten Codierung an dem Werkstück, eine eindeutige Identifizierung bzw. Zuordnung des Werkstücks W möglich ist und erfolgt.

In der in Fig. 1 dargestellten Ausführungsform ist der Überwachungsbereich 10 auf einen Zwischenspeicher beschränkt, der in Form eines Rollentisches ausgeführt ist. Der Rollentisch dient dazu, Werkstücke W, die von einer Rücktransporteinrichtung bzw. einem Fördermittel zugeführt werden, solange zwischenzuspeichern, bis ein Bediener diese entnehmen kann.

Bei der Zuführung von Werkstücken W, insbesondere von Werkstücken W die bereits vorher von einer Bearbeitungseinrichtung 50 der Durchlaufmaschine 1 bearbeitet wurden, kann es vorkommen, dass Werkstücke W nicht in einer Reihenfolge zugeführt werden, wie es für eine optimale weitere Prozessführung gewünscht ist. In solch einem Fall kann anhand der Informationseinrichtung 30 an den Bediener z.B. eine Handhabungsinformation HI ausgegeben werden, welche anzeigt, dass dieser nicht das vorderste Werkstück W im Zwischenspeicher als nächstes entnehmen soll, sondern z.B. das zuletzt zugeführte Werkstück W. Hierdurch ist es möglich, für den Bediener kompliziertere Bearbeitungsvorgänge, die an herkömmlichen Durchlaufmaschinen vermieden werden, um unnötige Bedienungsfehler zu vermeiden, sicher und effizient durchzuführen.

Ferner kann anhand der Informationseinrichtung 30 wie in Fig. 1 dargestellt, auf einer Werkbank oder einem Ablagebereich 40, einer Zuführeinrichtung 80 einer Bearbeitungseinrichtung 50 der Durchlaufmaschine 1, eine Handhabungsinformation HI ausgegeben werden. In der dargestellten Ausführungsform ist die Informationseinrichtung 30 zentral oberhalb des Überwachungsbereichs 10 und dem Ablagebereich 40 angeordnet.

So kann die Informationseinrichtung 30 eine Handhabungsinformation HI direkt auf den Ablagebereich 40, und falls gewünscht, auf den Überwachungsbereich 10, bzw. auf das im Überwachungsbereich 10 vorhandene Werkstück W projizieren. Was zusätzliche Informationsausgabeeinrichtungen wie Bildschirme, Tablets usw. überflüssig macht, wodurch der Arbeitsplatz für den Bediener ergonomisch ausgebildet werden kann, da der Bediener die Handhabungsinformation HI direkt an der gewünschten Stelle erhält. Es besteht auch die Möglichkeit, die Handhabungsinformation direkt auf das jeweilige Werkstück zu projizieren.

Wird nun in einem Folgeschritt nach der Erfassung oder Identifizierung eines Werkstücks W im Überwachungsbereich 10 einem Bediener anhand einer Handhabungsinformation HI angezeigt, dass er ein bestimmtes Werkstück W aus dem Überwachungsbereich 10 entnehmen soll und im Ablagebereich 40 an einer bestimmten Stelle, ggf. mit einer bestimmten Orientierung, ablegen soll, erfolgt nach Durchführung der Handhabung durch den Bediener eine Prüfung der durchgeführten Handhabung. Die Prüfung erfolgt in der in Fig. 1 gezeigten Ausführungsform anhand einer Prüfeinrichtung 70, die ebenfalls bevorzugt zentral oberhalb des Überwachungsbereichs 10 und dem Ablagebereich 40 angeordnet ist. Es besteht hierbei auch die Möglichkeit, die Prüfeinrichtung 70 und die Werkstückerfassungseinrichtung 20 anhand derselben Einrichtung 60, also z.B. anhand derselben Kameras zu realisieren.

Falls der Überwachungsbereich und der Ablagebereich bzw. der Prüfbereich zu weit voneinander entfernt liegen, können auch unterschiedliche Bilderfassungseinrichtungen (z.B. Kameras) genutzt werden und nur die Verarbeitungs- und/oder Auswerteeinrichtung gemeinsam ausgebildet sein.

Stellt nun im Rahmen der Prüfung die Prüfeinrichtung 70 fest, dass die von dem Bediener ausgeführte Handhabung nicht der angezeigten Handhabung (Handhabungsinformation HI) entspricht, oder das abgelegte Werkstück einen Mangel aufweist, kann eine Steuer- oder Regelungseinheit der Durchlaufmaschine 1 darauf entsprechend reagieren. So besteht die Möglichkeit, dass wenn der Bediener z.B. ein falsches Werkstück W im Ablagebereich 40 abgelegt hat, oder der Bediener ein Werkstück W an einer falschen Stelle in der Durchlaufmaschine 1 abgelegt hat, oder der Bediener das Werkstück 1 mit einer falschen Orientierung im Ablagebereich 40 abgelegt hat, dem Bediener mittels der Informationseinrichtung 30 eine neue Handhabungsinformation HI angezeigt wird, die den Bediener anweist, eine Korrektur vorzunehmen.

Wie in der Fig. 2 illustriert, besteht z.B. die Möglichkeit, dem Bediener nach Erkennen eines Fehlers anhand eines Pfeils, der direkt auf das Werkstück projiziert wird, anzuzeigen, dass er die Orientierung des abgelegten Werkstücks korrigieren muss. Es besteht auch die Möglichkeit dem Bediener anzuzeigen, dass das abgelegte Werkstück etwas mehr nach links oder rechts im Ablagebereich, oder in einem anderen Ablagebereich einer anderen Bearbeitungsmaschine abgelegt werden soll.

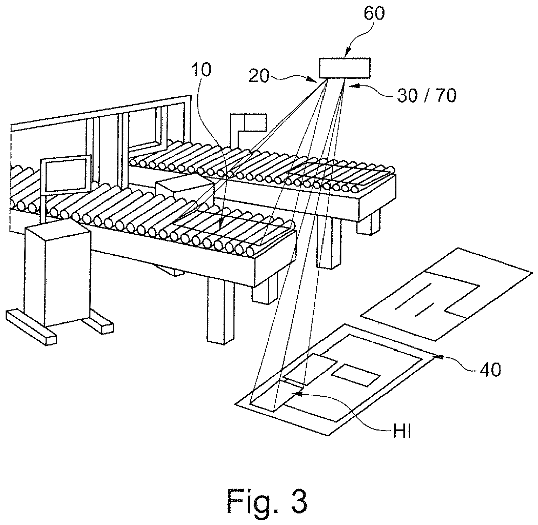

Fig. 3 zeigt eine weitere Ausführungsform der vorliegenden Erfindung. Wie dargestellt, kann bei der erfindungsgemäßen Durchlaufmaschine 1 bei der Abstapelung von bearbeiteten oder fertigen Werkstücken ebenfalls eine Werkstückerfassungseinrichtung 20 und eine Informationseinrichtung 30 genutzt werden. In der dargestellten Ausführungsform umfasst die Durchlaufmaschine 1 dazu einen Überwachungsbereich 10, eine Werkstückerfassungseinrichtung 20, eine Informationseinrichtung 30 und eine Prüfeinrichtung 70. Wie gezeigt ist jedoch im Falle der Nutzung im Rahmen der Abstapelung, der Überwachungsbereich 10 auf einen Zwischenspeicher oder Auslaufbereich der Durchlaufmaschine 1 beschränkt. Dem bearbeitete oder fertige Werkstücke W zugeführt werden, welche von einem Bediener manuell abgestapelt werden sollen. Entsprechend ist ein bestimmter Bereich (Abstapelplatz), bevorzugt eine Palette, als Prüfbereich definiert, welcher von der Prüfeinrichtung 70 überwacht wird. Hier besteht auch die Möglichkeit, dass mehrere Abstapelplätze vorgesehen sind.

Wird nun ein bearbeitetes oder fertiges Werkstück W dem Überwachungsbereich 10 zugeführt, erfolgt seitens der Werkstückerfassungseinrichtung 20 eine Erkennung des zugeführten Werkstücks W, was eine Erfassung und/oder Identifizierung des Werkstücks W auslöst. Hier kann die Erfassung und/oder die Identifizierung des Werkstücks W auch während des Transports auf einem Fördermittel oder dem Ausrollen auf Rollen des Zwischenspeichers erfolgen. Abhängig von den ermittelten Informationen der Werkstückerfassungseinrichtung 20 gibt die Informationseinrichtung 30 eine Handhabungsinformation (HI) an einen Bediener aus. Bevorzugt wird im Falle der Abstapelung, wie in Fig. 3 dargestellt, die Handhabungsinformation direkt auf den Abstapelplatz projiziert, insbesondere auf die Stelle (Abstapelposition) an der das jeweilige Werkstück W abgelegt werden soll. Hierbei kann die Handhabungsinformation die genaue Abstapelposition sowie die gewünschte Orientierung des abgelegten Werkstücks W umfassen.

Nachdem das Werkstück W von dem Bediener am Abstapelplatz abgelegt wurde, erfolgt anhand der Prüfeinrichtung 70 eine Prüfung der seitens des Bedieners vorgenommenen Handhabung, insbesondere ob das Werkstück W an der korrekten Position sowie mit der korrekten Orientierung abgestapelt wurde. Wenn die Prüfeinrichtung 70 erkennt, dass dem Bediener ein Fehler unterlaufen ist, z.B. das Werkstück W an einer falschen Stelle abgelegt wurde oder die Orientierung nicht der gewünschten Orientierung entspricht, kann die Steuer- oder Regelungseinheit der Durchlaufmaschine 1 entsprechend reagieren.

So besteht die Möglichkeit, dass dem Bediener mittels der Informationseinrichtung 30 eine neue Handhabungsinformation (HI) angezeigt wird, die den Bediener anweist, eine Korrektur vorzunehmen. Hier kann ebenfalls wie bereits vorher beschrieben, die Handhabungsinformation HI in Form eines Pfeils oder einer Warnmeldung direkt auf das Werkstück W projiziert werden.

Es besteht auch die Möglichkeit, lediglich die korrekte Ablageposition sowie Ablageorientierung durch Projektion der Außenkontur des Sollwerkstücks auf der Sollablageposition anzuzeigen.

In Fig. 4 sind anhand eines Ablaufdiagramms die einzelnen Verfahrensschritte einer Ausführungsform des Verfahrens zum Betreiben einer Durchlaufmaschine gemäß der vorliegenden Erfindung dargestellt.

In Schritt eins des Verfahrens zum Betreiben einer Durchlaufmaschine wird anhand der Werkstückerfassungseinrichtung, die einen Überwachungsbereich z.B. visuell überwacht, ein Werkstück in dem Überwachungsbereich erkannt. Dabei kann das Werkstück in Bewegung sein oder ruhen. Durch das Erkennen eines Werkstücks im Überwachungsbereich werden die nachfolgenden Schritte des Verfahrens getriggert.

In Verfahrensschritt zwei wird anhand der bereits genannten Werkstückerfassungseinrichtung eine Erfassung und/oder Identifizierung des Werkstücks durchgeführt. Hierbei können zum Beispiel visuell die Außenkontur, die Oberflächenbeschaffenheit des Werkstücks, vorgenommene Veredelungen und dergleichen ermittelt werden. Falls anhand der ermittelten Informationen eine eindeutige Zuordnung des erfassten Werkstücks möglich ist, also z.B. die Zuordnung zu einer bestimmten Artikelnummer oder zumindest zu einem bestimmten Werkstücktyp möglich ist, wird von einer Identifizierung des Werkstücks gesprochen.

Falls auf der Durchlaufmaschine lediglich gleiche Werkstücke bearbeitet werden, es jedoch auf die richtige Abfolge der Bearbeitungsschritte, insbesondere auf die Bearbeitung der korrekten Seite bzw. Kante des Werkstücks ankommt, so kann es ausreichend sein, dass lediglich die korrekte Orientierung des Werkstücks ermittelt und angezeigt wird.

Wurde anhand der Werkstückerfassungseinrichtung ein Werkstück erfasst, und konnte das Werkstück einer bestimmten Artikelnummer zugeordnet werden, welche z.B. als nächstes von einer Bearbeitungseinrichtung der Durchlaufmaschine bearbeitet werden soll, so erfolgt Schritt drei. Mit Schritt drei wird anhand der Informationseinrichtung dem Bediener eine Handhabungsinformation angezeigt. Im geschilderten Fall wird dem Bediener angezeigt, dass er das erfasst Werkstück aufnehmen soll, und mit der richtigen Orientierung im Ablagebereich der Zuführeinrichtung einer bestimmten Bearbeitungseinrichtung der Durchlaufmaschine ablegen soll.

Als nächstes führt in Schritt vier der Bediener gemäß der Handhabungsinformation die Handhabung aus. D.h., der Bediener nimmt das spezifische Werkstück auf und legt es mit korrekter Orientierung im Ablagebereich ab.

In Schritt fünf der dargestellten Ausführungsform wird anhand der Prüfeinrichtung eine Prüfung der seitens des Bedieners durchgeführten Handhabung durchgeführt. Hierbei wird grundsätzlich der Ist-Zustand des abgelegten Werkstücks mit einem hinterlegten Soll-Zustand verglichen. Bestätigt die Prüfeinrichtung dass die Handhabung seitens des Bedieners korrekt erfolgte, geht es mit Schritt 8 des Verfahrens weiter, und das Werkstück wird anhand der Zuführeinrichtung einer Bearbeitungsmaschine der Durchlaufmaschine zugeführt.

Erkennt jedoch die Prüfeinrichtung einen Mangel am Werkstück oder einen Fehler in der Handhabung seitens des Bedieners, erfolgt seitens der Steuereinrichtung der Durchlaufmaschine eine Suche nach einer durchführbaren Lösung und es geht mit Verfahrensschritt 6 weiter.

Entsprechend der seitens der Steuereinrichtung gefundenen Lösung wird anhand der Informationseinrichtung dem Bediener zuerst eine Warnmeldung angezeigt, mit welcher der Bediener über den unterlaufenen Fehler in Kenntnis gesetzt wird. Anschließend, oder auch gleichzeitig, wird eine Aufforderung zur Korrektur angezeigt. Sollte dies nicht möglich sein, wird in der Regel dem Bediener angezeigt, das Fehlteil auszuschleusen.

In Schritt 7 führt der Bediener gemäß der angezeigten Aufforderung zur Korrektur eine neue Handhabung aus, anhand der unterlaufene Fehler korrigiert wird. Anschließend geht es zurück zu Schritt 5, mit welchem anhand der Prüfeinrichtung erneut geprüft wird, ob der Ist-Zustand des Werkstücks dem Soll-Zustand entspricht.

## Patentansprüche

1. Verfahren zum Betreiben einer Durchlaufmaschine (1) zur Kanten- bzw. Kanten- und Formatbearbeitung von Werkstücken (W) mit den Schritten:
Erfassen und/oder Identifizieren eines Werkstücks (W) in einem Überwachungsbereich (10) der Durchlaufmaschine (1) mittels einer Werkstückerfassungseinrichtung (20),
Ausgabe einer Handhabungsinformation (HI) mittels einer Informationseinrichtung (30) an einen Bediener auf Grundlage der ermittelten Informationen der Werkstückerfassungseinrichtung (20),
Zuführen des gemäß der Handhabungsinformation (HI) durch einen Bediener gehandhabten Werkstücks (W) zu einer Bearbeitungseinrichtung (50) der Durchlaufmaschine (1), wobei das zu erfassende Werkstück (W) bereits durch eine Bearbeitungseinrichtung (50) der Durchlaufmaschine (1) bearbeitet wurde, wobei
der Überwachungsbereich (10) auf einen Bereich einer Rücktransporteinrichtung, mit der die Werkstücke (W) nach erfolgter Bearbeitung zum Bediener transportiert werden, der Durchlaufmaschine (1) bestimmt ist,
wobei das Werkstück von einem Auslauf der Durchlaufmaschine zu einer Zuführeinrichtung bewegt oder transportiert wird, wobei die Zuführeinrichtung mit einer Umlaufeinrichtung in Verbindung steht, die eingerichtet ist, das Werkstück von dem Auslauf der Durchlaufmaschine zur Zuführeinrichtung zu bewegen bzw. zu transportieren.

2. Verfahren nach Anspruch 1, **dadurch gekennzeichnet, dass** die Werkstückerfassungseinrichtung (20) die Werkstücke (W) während des Transports auf der Rücktransporteinrichtung und/oder die Werkstücke (W) im Stillstand, wenn sie in einem Zwischenspeicher der Rücktransporteinrichtung zwischengespeichert sind, erfasst und/oder identifiziert.

3. Verfahren nach einem der vorhergehenden Ansprüche, **dadurch gekennzeichnet, dass** die Handhabungsinformation (HI) an den Bediener visuell, insbesondere durch mindestens einen Bildschirm (31) und/oder mindestens eine Laseranzeigeeinrichtung (32) und/oder mindestens einen Beamer (33), der bzw. die bevorzugt die Handhabungsinformation auf eine Stelle (S) innerhalb der Durchlaufmaschine projiziert, akustisch und/oder haptisch ausgegeben wird.

4. Verfahren nach einem der vorhergehenden Ansprüche, **dadurch gekennzeichnet, dass** die Handhabungsinformationen (HI) auf das Werkstück (W) projiziert werden oder in einem Ablagebereich (40) der Durchlaufmaschine (1) visuell angezeigt werden, wobei bevorzugt
die Handhabungsinformationen (HI) in einem Ablagebereich (40) der Durchlaufmaschine (1) in Form einer Darstellung der Außenkontur des jeweiligen Werkstücks (W) an einer entsprechenden Ablageposition angezeigt werden.

5. Verfahren nach einem der vorhergehenden Ansprüche, **dadurch gekennzeichnet, dass** nach Ablage des gehandhabten Werkstücks (W) in einem Ablagebereich (40) anhand einer Prüfeinrichtung (70) eine Überprüfung der durchgeführten Handhabung erfolgt, wobei insbesondere die Position und Orientierung des abgelegten Werkstücks (W) geprüft wird.

6. Verfahren nach Anspruch 5, **dadurch gekennzeichnet, dass** ein nächster Bearbeitungsschritt eingeleitet wird, wenn die Prüfeinrichtung (70) bestätigt, dass die durchgeführte Handhabung der angewiesenen Handhabung bzw. den angewiesenen Handhabungsinformationen (HI) entspricht, wobei insbesondere die Position und/oder die Orientierung des Werkstücks (W) überprüft wird.

7. Verfahren nach einem der vorhergehenden Ansprüche, **dadurch gekennzeichnet, dass** das Werkstück (W) von der Werkstückerfassungseinrichtung (20) mittels eines Identifikationssystems oder mittels Auslesen einer Codierung erfasst wird, wobei bevorzugt
anhand der Werkstückerfassungseinrichtung (20) mindestens eine der nachfolgenden Informationen erfasst wird: eine Abmessung, Orientierung, Lage im Raum, Position, Masse, Vorhandensein sowie Lage und/oder Ausrichtung eines Etiketts, einer Markierung, eines Barcodes, eines Beschlags, einer Nut und/oder eines Bohrbilds am Werkstück (W), Oberflächenbeschaffenheit und Art der Veredelung.

8. Verfahren nach einem der vorhergehenden Ansprüche, **dadurch gekennzeichnet, dass** anhand von erfassten Abmessung bzw. Abmessungen und/oder der Form des Werkstücks (W) und/oder anhand einer am Werkstück (W) angebrachten Codierung eine Identifikation des Werkstücks (W) erfolgt.

9. Verfahren nach einem der Ansprüche 7 bis 8, **dadurch gekennzeichnet, dass** die Codierung in Form eines Barcodes, eines QR-Codes oder eines RFID-Chips erfolgt, wobei bevorzugt
die Prüfung auf Korrektheit, der seitens des Bedieners durchgeführten Handhabung, mittels einer Bildverarbeitungseinrichtung erfolgt.

10. Verfahren nach einem der Ansprüche 5 bis 9, **dadurch gekennzeichnet, dass** wenn mittels der Prüfeinrichtung (70) ein Handhabungsfehler erfasst wird, ein akustisches, haptisches und/oder visuelles Signal ausgegeben wird, wobei bevorzugt zusätzlich eine Korrekturinformation ausgegeben wird.

11. Verfahren nach einem der vorhergehenden Ansprüche, **dadurch gekennzeichnet, dass** das Erfassen und/oder Identifizieren des Werkstücks (W) und die Prüfung der durchgeführten Handhabung durch dieselbe Einrichtung (60) vorgenommen wird.

12. Durchlaufmaschine (1) zur Kanten- bzw. Kanten- und Formatbearbeitung von Werkstücken (W) aufweisend:
einen Überwachungsbereich (10),
eine Werkstückerfassungseinrichtung (20), die eingerichtet ist, eine Erfassung und/oder Identifizierung eines Werkstücks (W) durchzuführen, wenn ein Werkstück (W) im Überwachungsbereich (10) vorliegt,
eine Informationseinrichtung (30), die eingerichtet ist, basierend auf Informationen, die von der Werkstückerfassungseinrichtung (20) ermittelt werden, eine Handhabungsinformation (HI) auszugeben,
eine Zuführeinrichtung (80) zum Zuführen eines Werkstücks (W) zu einer Bearbeitungseinrichtung (50) der Durchlaufmaschine (1), wobei die Zuführeinrichtung mit einer Umlaufeinrichtung in Verbindung steht, die eingerichtet ist, ein Werkstück (W) von einem Auslauf der Durchlaufmaschine (1) zur Zuführeinrichtung (80) zu bewegen oder zu transportieren, wobei
der Überwachungsbereich (10) auf einen Bereich einer Rücktransporteinrichtung, mit der die Werkstücke nach erfolgter Bearbeitung zum Bediener transportiert werden, der Durchlaufmaschine bestimmt ist.

13. Durchlaufmaschine nach Anspruch 12, **dadurch gekennzeichnet, dass**
die Werkstückerfassungseinrichtung (20) in Form eines Identifikationssystems oder einer Ausleseeinrichtung, die eine am Werkstück (W) angebrachte Codierung ausliest, ausgebildet ist.

14. Durchlaufmaschine nach einem der Ansprüche 12 bis 13, **dadurch gekennzeichnet, dass** die Informationseinrichtung (30) in Form mindestens eines Bildschirms (31), und/oder einer Datenbrille, und/oder eines Head Mounted Displays, und/oder mindestens einer Laseranzeigeeinrichtung (32) und/oder mindestens eines Beamers (33), der bzw. die die Handhabungsinformation (HI) auf eine Stelle (S) innerhalb der Durchlaufmaschine (1) projiziert, und/oder mindestens einen Lautsprecher bzw. Kopfhörer und/oder einem Tastgerät, wie z.B. einem Datenhandschuh, ausgebildet ist.

15. Durchlaufmaschine nach einem der Ansprüche 12 bis 14, **dadurch gekennzeichnet, dass** das Identifikationssystem in Form einer Bildverarbeitungseinrichtung ausgebildet ist, das bevorzugt anhand von mindestens einer Kamera das Werkstück erfasst, und anhand einer Verarbeitungs- und/oder Auswerteeinrichtung Informationen für die Informationseinrichtung (30) ermittelt.

## Claims

1. Method for operating a throughfeed machine (1) for edge-machining or edge-machining and formatting workpieces (W), with the steps:
scanning and/or identifying a workpiece (W) in a monitoring region (10) of the throughfeed machine (1) by means of a workpiece scanning device (20),
outputting handling information (HI) to an operator by means of an information device (30) based on the information determined by the workpiece scanning device (20),
feeding the workpiece (W), handled by an operator according to the handling information (HI), to a processing device (50) of the throughfeed machine (1), wherein the workpiece (W) which is to be scanned has already been processed by a processing device (50) of the throughfeed machine (1), wherein the monitoring region (10) is limited to a region of a return transport device of the throughfeed machine (1) with which the workpieces (W) are transported to the operator after successful processing,
wherein the workpiece is moved or transported from an outlet of the throughfeed machine to a feed device, wherein the feed device is connected to a circulation device which is configured to move or transport the workpiece from the outlet of the throughfeed machine to the feed device.

2. Method according to claim 1, **characterised in that** the workpiece scanning device (20) scans and/or identifies the workpieces (W) while they are being transported on the return transport device and/or scans and/or identifies the workpieces (W) when stationary if they are buffered in a buffer of the return transport device.

3. Method according to one of the preceding claims, **characterised in that** the handling information (HI) is output to the operator visually, acoustically and/or haptically, in particular by at least one screen (31) and/or at least one laser display device (32) and/or at least one beamer (33) which preferably projects the handling information onto a location (S) within the throughfeed machine.

4. Method according to one of the preceding claims, **characterised in that** the handling information (HI) is projected onto the workpiece (W) or visually displayed in a deposition region (40) of the throughfeed machine (1), wherein, preferably,
the handling information (HI) is displayed in a deposition region (40) of the throughfeed machine (1) in the form of a representation of the outline of the respective workpiece (W) in a corresponding deposition position.

5. Method according to one of the preceding claims, **characterised in that**, after the handled workpiece (W) has been deposited in a deposition region (40), a check of the performed handling is carried out by means of a checking device (70), wherein in particular the position and orientation of the deposited workpiece (W) is checked.

6. Method according to claim 5, **characterised in that** a next processing step is initiated if the checking device (70) confirms that the performed handling corresponds to the specified handling or the specified handling information (HI), wherein in particular the position and/or orientation of the workpiece (W) is checked.

7. Method according to one of the preceding claims, **characterised in that** the workpiece (W) is identified by the workpiece scanning device (20) by means of an
identification system or by reading a code, wherein, preferably,
The workpiece scanning device (20) registers at least one of the following pieces of information: a dimension, orientation, position in space, position, mass, presence as well as position and/or orientation of a label, a marking, a barcode, a fitting, a groove and/or a drilling pattern on the workpiece (W), surface finish and type of finishing.

8. Method according to one of the preceding claims, **characterised in that** an identification of the workpiece (W) is carried out on the basis of the scanned dimension or dimensions and/or the shape of the workpiece (W) and/or on the basis of a code applied to the workpiece (W).

9. Method according to one of the claims 7 to 8, **characterised in that** the code is in the form of a barcode, a QR code or an RFID chip, wherein, preferably,
the correctness of the handling performed by the operator is checked by means of an image processing device.

10. Method according to one of the claims 5 to 9, **characterised in that** if a handling error is detected by means of the checking device (70), an acoustic, haptic and/or visual signal is output, wherein, preferably, a correction information is additionally output.

11. Method according to one of the preceding claims, **characterised in that** the scanning and/or identification of the workpiece (W) and the checking of the performed handling is carried out by the same device (60).

12. Throughfeed machine (1) for edge-machining or edge-machining and formatting workpieces (W), having:
a monitoring region (10),
a workpiece scanning device (20) which is configured to scan and/or identify a workpiece (W) if a workpiece (W) is present in the monitoring region (10),
an information device (30) which is configured to output handling information (HI) based on information determined by the workpiece scanning device (20),
a feed device (80) for feeding a workpiece (W) to a processing device (50) of the throughfeed machine (1), wherein the feed device is connected to a circulation device which is configured to move or transport a workpiece (W) from an outlet of the throughfeed machine (1) to the feed device (80), wherein
the monitoring region (10) is limited to a region of a return transport device of the throughfeed machine with which the workpieces are transported to the operator after processing has been carried out.

13. Throughfeed machine according to claim 12, **characterised in that**
the workpiece scanning device (20) is designed in the form of an identification system or a reader device which reads a code applied to the workpiece (W).

14. Throughfeed machine according to one of the claims 12 to 13, **characterised in that** the information device (30) is designed in the form of at least one screen (31), and/or data glasses, and/or a head mounted display, and/or at least one laser display device (32) and/or at least one beamer (33) projecting the handling information (HI) onto a location (S) within the throughfeed machine (1), and/or at least one loudspeaker or headphones and/or a keyer such as a data glove for example.

15. Throughfeed machine according to one of the claims 12 to 14, **characterised in that** the identification system is designed in the form of an image processing device which preferably scans the workpiece by means of at least one camera, and determines information for the information device (30) on the basis of a processing and/or evaluation device.

## Revendications

1. Procédé d'exploitation d'une machine en continu (1) pour le traitement des arêtes ou des arêtes et des formats de pièces à usiner (W), comprenant les étapes suivantes :
la détection et/ou l'identification d'une pièce à usiner (W) dans une zone de surveillance (10) de la machine en continu (1) au moyen d'un appareil de détection de pièce à usiner (20),
l'émission d'une information de manipulation (HI) au moyen d'un appareil d'information (30) à un opérateur sur la base des informations déterminées de l'appareil de détection de pièce à usiner (20),
la fourniture de la pièce à usiner (W) manipulée par un opérateur selon l'information de manipulation (HI), à un appareil de traitement (50) de la machine continue (1), dans lequel la pièce à usiner (W) à détecter a déjà été traitée par un appareil de traitement (50) de la machine continue (1), dans lequel la zone de surveillance (10) est déterminée sur une zone d'un appareil de transport de retour, avec lequel les pièces à usiner (W) sont transportées vers l'opérateur après le traitement terminé, de la machine continue (1),
dans lequel la pièce à usiner est déplacée ou transportée depuis une sortie de la machine en continu jusqu'à un appareil de fourniture, dans lequel l'appareil de fourniture se trouve en liaison avec un appareil de circulation qui est conçu pour déplacer ou transporter la pièce à usiner depuis la sortie de la machine en continu jusqu'à l'appareil de fourniture.

2. Procédé selon la revendication 1, **caractérisé en ce que** l'appareil de détection de pièces (20) détecte et/ou identifie les pièces à usiner (W) pendant le transport sur l'appareil de transport de retour et/ou les pièces à usiner (W) à l'arrêt, lorsqu'elles sont stockées temporairement dans une mémoire intermédiaire de l'appareil de transport de retour.

3. Procédé selon l'une quelconque des revendications précédentes, **caractérisé en ce que** l'information de manipulation (HI) est délivrée à l'opérateur de manière visuelle, en particulier par au moins un écran (31) et/ou au moins un appareil d'affichage laser (32) et/ou au moins un vidéoprojecteur (33), qui projette de préférence l'information de manipulation sur un emplacement (S) à l'intérieur de la machine en continu, de manière acoustique et/ou haptique.

4. Procédé selon l'une quelconque des revendications précédentes, **caractérisé en ce que** les informations de manipulation (HI) sont projetées sur la pièce à usiner (W) ou affichées visuellement dans une zone de dépôt (40) de la machine en continu (1), dans lequel de préférence
les informations de manipulation (HI) sont affichées dans une zone de dépôt (40) de la machine en continu (1) sous la forme d'une représentation du contour extérieur de la pièce à usiner (W) respective à une position de dépôt correspondante.

5. Procédé selon l'une quelconque des revendications précédentes, **caractérisé en ce qu'**après le dépôt de la pièce à usiner (W) manipulée dans une zone de dépôt (40), un contrôle de la manipulation effectuée a lieu à l'aide d'un appareil de contrôle (70), dans lequel en particulier la position et l'orientation de la pièce à usiner (W) déposée sont contrôlées.

6. Procédé selon la revendication 5, **caractérisé en ce qu'**une étape de traitement suivante est lancée lorsque l'appareil de contrôle (70) confirme que la manipulation effectuée correspond à la manipulation effectuée ou aux informations de manipulation (HI) effectuées, dans lequel en particulier la position et/ou l'orientation de la pièce à usiner (W) est contrôlée.

7. Procédé selon l'une quelconque des revendications précédentes, **caractérisé en ce que**
la pièce à usiner (W) est détectée par l'appareil de détection de pièce à usiner (20) au moyen d'un système d'identification ou au moyen de la lecture d'un codage, dans lequel de préférence
au moins l'une des informations suivantes est détectée à l'aide de l'appareil de détection de pièce à usiner (20) : une dimension, une orientation, une situation dans l'espace, une position, une masse, la présence ainsi que la position et/ou l'orientation d'une étiquette, d'un marquage, d'un code barres, d'une ferrure, d'une rainure et/ou d'un schéma de perçage sur la pièce à usiner (W), la nature de la surface et le type de finition.

8. Procédé selon l'une quelconque des revendications précédentes, **caractérisé en ce qu'**une identification de la pièce à usiner (W) a lieu à l'aide de la dimension ou des dimensions détectées et/ou de la forme de la pièce à usiner (W) et/ou à l'aide d'un codage appliqué sur la pièce à usiner (W).

9. Procédé selon l'une quelconque des revendications 7 à 8, **caractérisé en ce que** le codage a lieu sous la forme d'un code barres, d'un code QR ou d'une puce RFID, dans lequel, de préférence,
le contrôle de l'exactitude de la manipulation effectuée par l'opérateur a lieu au moyen d'un appareil de traitement d'images.

10. Procédé selon l'une quelconque des revendications 5 à 9, **caractérisé en ce que** lorsqu'une erreur de manipulation est détectée au moyen de l'appareil de contrôle (70), un signal acoustique, haptique et/ou visuel est émis, dans lequel de préférence une information de correction est également émise.

11. Procédé selon l'une quelconque des revendications précédentes, **caractérisé en ce que** la détection et/ou l'identification de la pièce à usiner (W) et le contrôle de la manipulation effectuée sont assurés par le même appareil (60).

12. Machine en continu (1) pour le traitement des arêtes ou des arêtes et des formats de pièces à usiner (W) présentant :
une zone de surveillance (10),
un appareil de détection de pièce à usiner (20), qui est conçu pour effectuer une détection et/ou une identification d'une pièce à usiner (W) lorsqu'une pièce à usiner (W) est présente dans la zone de surveillance (10),
un appareil d'information (30) qui est conçu pour émettre une information de manipulation (HI) sur la base d'informations qui sont déterminées par l'appareil de détection de pièce à usiner (20),
un appareil de fourniture (80) pour fournir une pièce à usiner (W) à un appareil de traitement (50) de la machine continue (1), dans laquelle l'appareil de fourniture se trouve en liaison avec un appareil de circulation qui est conçu pour déplacer ou transporter une pièce à usiner (W) depuis une sortie de la machine continue (1) jusqu'à l'appareil de fourniture (80), dans laquelle la zone de surveillance (10) est destinée à une zone d'un appareil de transport de retour, avec lequel les pièces à usiner sont transportées vers l'opérateur après le traitement terminé, de la machine continue.

13. Machine en continu selon la revendication 12, **caractérisée en ce que** l'appareil de détection de pièce à usiner (20) est réalisé sous la forme d'un système d'identification ou d'un appareil de lecture qui lit un codage appliqué à la pièce à usiner (W).

14. Machine en continu selon l'une quelconque des revendications 12 à 13, **caractérisée en ce que** l'appareil d'information (30) est réalisé sous la forme d'au moins un écran (31), et/ou de lunettes de données, et/ou d'un Head Mounted Display, et/ou d'au moins un appareil d'affichage laser (32) et/ou d'au moins un projecteur (33) qui projette l'information de manipulation (HI) sur un emplacement (S) à l'intérieur de la machine en continu (1), et/ou d'au moins un haut-parleur ou un casque et/ou un équipement de palpage, comme un gant de données.

15. Machine en continu selon l'une quelconque des revendications 12 à 14, **caractérisée en ce que** le système d'identification est réalisé sous la forme d'un appareil de traitement d'images, qui détecte la pièce à usiner de préférence à l'aide d'au moins une caméra, et détermine des informations pour l'appareil d'information (30) à l'aide d'un appareil de traitement et/ou d'évaluation.
